# EUROPEAN PATENT SPECIFICATION

(11) **EP 3 550 117 B1**
(45) Date of publication and mention of the grant of the patent: **08.09.2021**
(21) Application number: 19164556.3
(22) Date of filing: 22.03.2019
(51) Int. Cl.: F01N 3/28, F01N 5/02, F01N 3/02

(54) **EXHAUST HEAT RECOVERY STRUCTURE**
ABWÄRMERÜCKGEWINNUNGSSTRUKTUR
STRUCTURE DE RÉCUPÉRATION DE CHALEUR D'ÉCHAPPEMENT

(30) Priority: 03.04.2018 JP 2018071625
(43) Date of publication of application: 09.10.2019
(73) Proprietor: TOYOTA JIDOSHA KABUSHIKI KAISHA, Toyota-shi, Aichi-ken 471 8571 (JP)
(72) Inventor: MURATA, Toshio, TOYOTA-SHI, AICHI-KEN, 471-8571 (JP); KAIDO, Yuuichi, MIYOSHI-SHI, AICHI, 470-0225 (JP); KOSHIN, Keiichi, MIYOSHI-SHI, AICHI, 470-0225 (JP); SHIRAI, Masahiro, MIYOSHI-SHI, AICHI, 470-0225 (JP); ICHIKAWA, Koji, MIYOSHI-SHI, AICHI, 470-0225 (JP)
(74) Representative: Cabinet Beau de Loménie

(56) References cited:
- EP-A2- 1 884 634
- JP-A- 2012 246 836
- US-A1- 2016 186 625

## Description

### BACKGROUND

### Technical Field

The present disclosure relates to an exhaust heat recovery structure.

### Related Art

Japanese Patent Application Laid-Open (JP-A) No. 2012-246836 discloses an exhaust heat recovery structure that exchanges heat between a first heat medium (exhaust gas) flowing through a heat-transfer tube and coolant flowing outside the heat-transfer tube.

In a structure according to JP-A No. 2012-246836, an exhaust gas channel is configured by two left and right components being welded along a flow direction of the exhaust gas. This structure must be welded in two places. Therefore, there is scope for improvement in regard to improving productivity.

### SUMMARY

The present disclosure provides an exhaust heat recovery structure as defined in the claims that may improve productivity.

A first aspect of the present disclosure is an exhaust heat recovery structure as defined in claim 1.

The exhaust heat recovery structure relating to the first aspect includes the first pipe through which exhaust gas from the engine flows and the second pipe that branches from the first pipe. The heat exchanger that implements heat exchange from the exhaust gas is provided in the second pipe. The opening and closing valve is provided in the first pipe. Flow amounts of the exhaust gas flowing into the second pipe are adjusted by the opening and closing valve opening and closing. Therefore, in a case in which heat exchange is to be actively implemented, the opening and closing valve is fully closed and most of the exhaust gas flows into the second pipe. Conversely, when heat exchange is not required, the opening and closing valve is fully opened and most of the exhaust gas flows into the first pipe.

The structure of the first pipe includes the first pipe body and the second pipe body that are adjacent in the flow direction of the exhaust gas. The join portion between the first pipe body and the second pipe body is provided along the circumferential direction of the first pipe. That is, the first pipe is formed by the first pipe body and the second pipe body being joined along the circumferential direction of the first pipe. Therefore, when, for example, the first pipe body and second pipe body are joined by welding, the first pipe may be formed with a single weld.

In a second aspect of the present disclosure, in the first aspect, the first pipe body is disposed at an upstream side of the flow direction of the exhaust gas, and the second pipe body may be disposed at the downstream side of the flow direction of the exhaust gas; and the first pipe body and second pipe body are joined in a state in which an end portion of the first pipe body, at a side thereof at which the second pipe body is disposed, may be superposed with an outer periphery face of the second pipe body.

In the exhaust heat recovery structure relating to the second aspect, the joining is implemented in the state in which the end portion of the first pipe body that is disposed at the upstream side of the flow direction of the exhaust gas is superposed with the outer periphery face of the second pipe body. Therefore, in contrast with a structure in which the end portion of the first pipe body is superposed with an inner periphery face of the second pipe body, the join portion may be specified to be in a lower temperature region further to the exhaust gas downstream side.

In a third aspect of the present disclosure, in the first aspect or the second aspect, a connection hole at which a connecting pipe is connected may be formed at each of one axial direction end portion and another axial direction end portion of the first pipe; and, viewed in an axial direction of the first pipe, the connection hole may be formed in a circular shape with no irregularities.

In the exhaust heat recovery structure relating to the third aspect, viewed in the axial direction of the first pipe, each connection hole is formed in a circular shape with no irregularities. Therefore, gaps between the connecting pipe and the first pipe are less likely to occur than in a structure in which a connection hole is formed in a non-continuous circular shape. The meaning of the term "a circular shape with no irregularities" as used herein is intended to exclude structures in which a portion of the periphery of a connection hole is formed in a protruding or recessed shape by a step or the like. Accordingly, the meaning of the term "a circular shape with no irregularities" is intended to include structures in which very small irregularities are formed during machining, as long as there are no protrusions or recesses in broad terms.

As described above, according to the exhaust heat recovery structure relating to the first aspect, productivity may be improved.

According to the exhaust heat recovery structure relating to the second aspect, thermal strain caused by exhaust gas acting on the join region may be suppressed.

According to the exhaust heat recovery structure relating to the third aspect, ease of assembly of connecting pipes may be improved.

### BRIEF DESCRIPTION OF THE DRAWINGS

Exemplary embodiments of the present disclosure will be described in detail based on the following figures, wherein:
Fig. 1 is a side sectional view illustrating an exhaust heat recovery structure according to an exemplary embodiment, depicting a state in which an opening and closing valve is fully closed;
Fig. 2 is a side sectional view illustrating the exhaust heat recovery structure according to the exemplary embodiment, depicting a state in which the opening and closing valve is half open; and
Fig. 3 is a side sectional view illustrating an exhaust heat recovery structure according to a comparative example which is not part of the claimed invention.

### DETAILED DESCRIPTION

Herebelow, an exhaust heat recovery structure according to a first exemplary embodiment is described with reference to the attached drawings. Herein, the arrow UP that is shown where appropriate in the drawings indicates a vehicle upper side, and the arrow FR indicates a vehicle front side. In the following descriptions, where the directions front, rear, up, down, left and right are used without being particularly specified, the same represent the front and rear in the vehicle front-and-rear direction, up and down in the vehicle vertical direction, and left and right if facing in the forward progress direction.

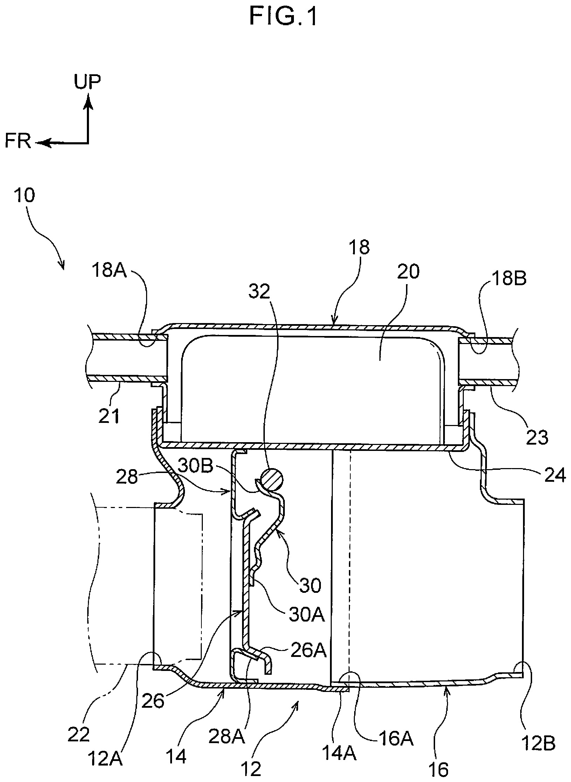

As shown in Fig. 1, the exhaust heat recovery structure according to the present exemplary embodiment includes an exhaust heat recovery unit 10 that is disposed with an axial direction thereof in the front-and-rear direction of the vehicle. In the present exemplary embodiment, an engine (not shown in the drawings) is disposed at the vehicle front side relative to the exhaust heat recovery unit 10; exhaust gas flows from the engine. Accordingly, the vehicle front side is referred to as the exhaust gas flow upstream side and the vehicle rear side is referred to as the exhaust gas flow downstream side.

The exhaust heat recovery unit 10 principally includes a first pipe 12, a second pipe 18, a heat exchanger 20 and an opening/closing valve 26. Below, overall structure of the exhaust heat recovery unit 10 is described and then the first pipe 12, which is a principal portion of the present structure, is described in detail.

- Overall Structure of the Exhaust Heat Recovery Unit 10 - The first pipe 12 is a pipe body whose axial direction is in the vehicle front-and-rear direction. The first pipe 12 provides a channel along which the exhaust gas flows. A front side connection hole 12A is formed in an end portion at the vehicle front side (the exhaust gas flow upstream side) of the first pipe 12.

Viewed in the axial direction of the first pipe 12, the front side connection hole 12A is formed in a circular shape with no irregularities. That is, the periphery of the front side connection hole 12A is formed in a circular shape with no steps or the like. The front side connection hole 12A is structured such that a connecting pipe 22, which extends from the side of the first pipe 12 at which the engine is disposed, may be connected at the front side connection hole 12A.

A rear side connection hole 12B is formed in an end portion at the vehicle rear side (the exhaust gas flow downstream side) of the first pipe 12. Similarly to the front side connection hole 12A, viewed in the axial direction of the first pipe 12, the rear side connection hole 12B is formed in a circular shape with no irregularities. A connecting pipe (not shown in the drawings) is connected at the rear side connection hole 12B. Exhaust gas that has passed through the exhaust heat recovery unit 10 flows through this connecting pipe toward a muffler (not shown in the drawings) at the downstream side.

The second pipe 18 is disposed at the vehicle upper side of the first pipe 12. The second pipe 18 is a pipe body whose axial direction is in the vehicle front-and-rear direction. A front side connection hole 18A is formed in an end portion at the vehicle front side of the second pipe 18. One end portion of a front side water tube 21 is connected at the front side connection hole 18A. Another end side of the front side water tube 21 is connected to the engine. Accordingly, coolant that has passed through the engine passes through the front side water tube 21 and is introduced into the second pipe 18.

A rear side connection hole 18B is formed in an end portion at the vehicle rear side of the second pipe 18. One end portion of a rear side water tube 23 is connected at the rear side connection hole 18B. Another end side of the rear side water tube 23 is connected to the engine. Accordingly, coolant that has passed through the second pipe 18 passes through the rear side water tube 23 and is fed back to the engine. In other words, a structure is formed such that the coolant is circulated between the engine and the second pipe 18.

The heat exchanger 20 is provided at the second pipe 18. The heat exchanger 20 is an apparatus that implements heat exchange with the exhaust gas. Plural heat-transfer tubes (not shown in the drawings) are accommodated inside the heat exchanger 20, and fins are arranged inside the respective heat-transfer tubes. The exhaust gas flows inside the heat-transfer tubes. To be specific, an inlet portion (not shown in the drawings) through which the exhaust gas is introduced is formed at a front end portion of the heat exchanger 20. Exhaust gas branching from the first pipe 12 into the second pipe 18 is introduced into the heat-transfer tubes of the heat exchanger 20 through the inlet portion. An outlet portion (not shown in the drawings) through which the exhaust gas flows out is formed at a rear end portion of the heat exchanger 20. The exhaust gas flowing out through the outlet portion flows from the second pipe 18 into the first pipe 12.

A channel through which the coolant flows inside the second pipe 18 is formed outside the heat-transfer tubes. Consequently, heat is exchanged between the exhaust gas flowing inside the heat-transfer tubes and the coolant outside the heat-transfer tubes.

The heat exchanger 20 is disposed on a support plate 24. The heat exchanger 20 is joined to the support plate 24 by welding or the like in a state in which peripheral edge portions of the support plate 24 are inflected toward the vehicle upper side and superposed with the first pipe 12.

The opening/closing valve 26 is provided in the first pipe 12. By opening and closing, the opening/closing valve 26 adjusts flow amounts of exhaust gas flowing into the second pipe 18. Viewed in the axial direction of the first pipe 12, the opening/closing valve 26 is formed in a substantially circular shape. In the fully closed state depicted in Fig. 1, the opening/closing valve 26 is pressed against a stopper 28 that is disposed to encircle the opening/closing valve 26.

Viewed in the axial direction of the first pipe 12, the stopper 28 is formed in a substantially annular shape. Outer periphery edge portions of the stopper 28 are inflected toward the vehicle rear side and are joined to the first pipe 12 and the support plate 24.

A mating portion 28A that is inflected toward the vehicle rear side and mates with the opening/closing valve 26 is formed at an inner periphery edge portion of the stopper 28. An abutting portion 26A is formed at an outer periphery edge portion of the opening/closing valve 26. The abutting portion 26A is inflected toward the vehicle rear side at an angle corresponding with the mating portion 28A of the stopper 28. Thus, in the fully closed state of the opening/closing valve 26, the abutting portion 26A of the opening/closing valve 26 abuts against the mating portion 28A of the stopper 28.

A lower end portion 30A of an arm 30 is fixed to a face at the vehicle rear side of the opening/closing valve 26. In the fully closed state of the opening/closing valve 26, the arm 30 extends in the vehicle vertical direction. The lower end portion 30A of the arm 30 is fixed to a substantially central portion of the opening/closing valve 26. An upper end portion 30B of the arm 30 is fixed to a turning axle 32. The arm 30 is structured so as to swing in accordance with turning of the turning axle 32. In this exemplary embodiment, an urging member (not shown in the drawings) is provided at the turning axle 32. The turning axle 32 is urged in the clockwise direction of the drawings by this urging member. Consequently, in an unloaded state, the opening/closing valve 26 is pressed against the stopper 28. A resilient member is attached to at least one of the opening/closing valve 26 and the stopper 28. Thus, a sound when the opening/closing valve 26 and the stopper 28 make contact is suppressed.

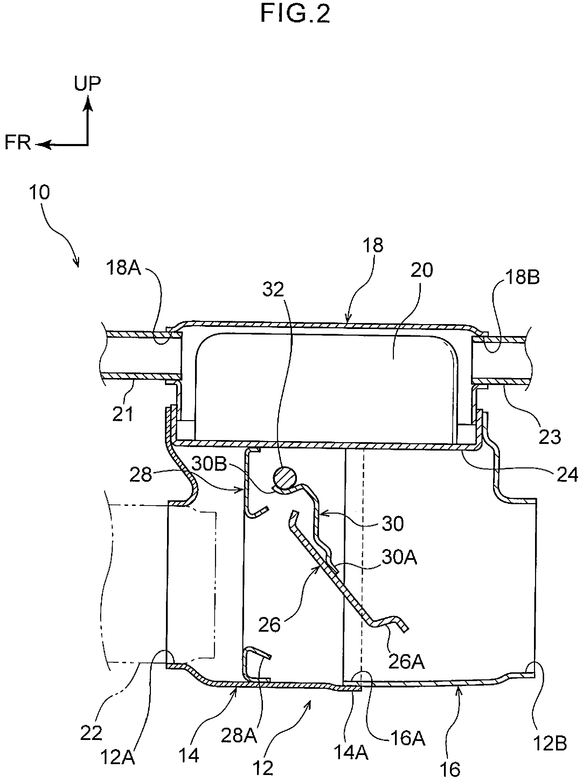

The turning axle 32 is connected to a driving mechanism (not shown in the drawings). When the driving mechanism operates, the turning axle 32 is turned. The driving mechanism is electronically connected to an electronic control unit (ECU), which is a control section. The driving mechanism turns the turning axle 32 to predetermined angles, opening and closing the opening/closing valve 26, in accordance with signals from the ECU. In the present exemplary embodiment, during warmup after the engine starts, the opening/closing valve 26 is put into the fully closed state in accordance with signals from the ECU. Therefore, exhaust gas flows into the heat exchanger 20 in the second pipe 18, and heat exchange between the coolant and the exhaust gas is actively implemented. Consequently, the coolant may be heated and the warmup may be accelerated. After the warmup, as shown in Fig. 2, the turning axle 32 is turned to a predetermined angle in accordance with signals from the ECU, opening the opening/closing valve 26. Therefore, the first pipe 12 is opened up and amounts of exhaust gas flowing into the second pipe 18 are reduced. Consequently, heat exchange between the coolant and the exhaust gas may be suppressed, and a temperature rise of the coolant may be restrained.

### - Structure of the First Pipe 12 -

As shown in Fig. 1, the first pipe 12 includes a first pipe body 14 and a second pipe body 16 that are adjacent in the flow direction of the exhaust gas. The first pipe body 14 is disposed at the vehicle front side (the exhaust gas flow direction upstream side). The front side connection hole 12A is formed in a front end portion of the first pipe body 14.

An upper portion of the first pipe body 14 is open. This opening portion is covered from the vehicle upper side thereof by the support plate 24. A rear end portion 14A of the first pipe body 14 has a slightly larger diameter than a general portion of the first pipe body 14. The rear end portion 14A is superposed with an outer periphery face of the second pipe body 16, which is described below.

The second pipe body 16 is disposed at the vehicle rear side (the exhaust gas flow direction downstream side) relative to the first pipe body 14. The rear side connection hole 12B is formed in a rear end portion of the second pipe body 16. Similarly to the first pipe body 14, an upper portion of the second pipe body 16 is open, and this opening portion is covered from the vehicle upper side thereof by the support plate 24. A front end portion 16A of the second pipe body 16 is superposed with an inner periphery face of the rear end portion 14A of the first pipe body 14. The first pipe body 14 and second pipe body 16 are welded (joined) in the region in which the rear end portion 14A of the first pipe body 14 and the front end portion 16A of the second pipe body 16 are superposed. Thus, a join portion between the first pipe body 14 and the second pipe body 16 is provided along the circumferential direction of the first pipe 12.

### - Operation -

Operation of the present exemplary embodiment are described next.

In the exhaust heat recovery unit 10 constituting an exhaust heat recovery structure according to the present exemplary embodiment, the heat exchanger 20 is provided at the second pipe 18, and flow amounts of exhaust gas flowing into the second pipe 18 are adjusted by opening and closing of the opening/closing valve 26 provided at the first pipe 12. Therefore, when heat exchange is to be actively implemented, the opening/closing valve 26 is fully closed and most of the exhaust gas flows into the second pipe 18. Conversely, when heat exchange is not required, the opening/closing valve 26 is fully opened and most of the exhaust gas may flow into the first pipe 12.

In the exhaust heat recovery unit 10 according to the present exemplary embodiment, the first pipe 12 includes the first pipe body 14 and second pipe body 16 that are adjacent in the vehicle front-and-rear direction, and the join portion between the first pipe body 14 and the second pipe body 16 is provided along the circumferential direction of the first pipe 12. That is, the first pipe 12 is formed by the first pipe body 14 and second pipe body 16 being joined along the circumferential direction of the first pipe 12. Therefore, the first pipe 12 may be formed with a single weld, and productivity may be improved.

In the exhaust heat recovery unit 10 according to the present exemplary embodiment, viewed in the axial direction of the first pipe 12, the front side connection hole 12A and the rear side connection hole 12B are formed in circular shapes with no irregularities. That is, the periphery of the front side connection hole 12A and the periphery of the rear side connection hole 12B are free of protrusions and recesses formed by steps and the like. Therefore, the formation of a gap between the connecting pipe 22 and the first pipe 12 may be suppressed compared to a structure in which there is a protrusion or recess at a portion of the periphery of the connecting hole. Consequently, ease of assembly of the connecting pipe 22 may be improved.

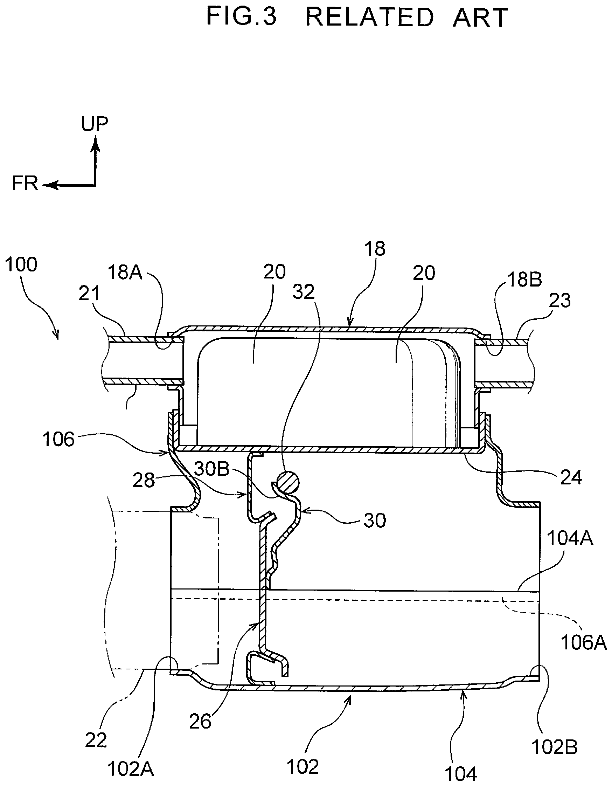

The effects described above are now described by comparison with the structure of a comparative example shown in Fig. 3. Structures in Fig. 3 that are the same as in the exemplary embodiment are assigned the same reference symbols and, as appropriate, are not described.

As shown in Fig. 3, an exhaust heat recovery unit 100 according to the comparative example includes a first pipe 102 and the second pipe 18. The second pipe 18 has the same structure as in the exemplary embodiment, and therefore is not described here.

The first pipe 102 according to the comparative example includes a first pipe body 104 and a second pipe body 106. The first pipe body 104 structures a lower half of the first pipe 102 and is formed in a substantially hemicylindrical shape extending in the vehicle front-and-rear direction. Therefore, an upper end portion 104A of the first pipe body 104 extends to the vehicle front and rear along a vertical direction middle portion of the first pipe 102.

The second pipe body 106 structures the upper half of the first pipe 102 and extends in the vehicle front-and-rear direction. An opening portion in an upper portion of the second pipe body 106 is covered by the support plate 24 of the heat exchanger 20. A lower end portion 106A of the second pipe body 106 is superposed with an outer periphery face of the upper end portion 104A of the first pipe body 104. The first pipe body 104 and second pipe body 106 are welded (joined) in the region in which the upper end portion 104A of the first pipe body 104 and the lower end portion 106A of the second pipe body 106 are superposed. Thus, a join portion between the first pipe body 104 and the second pipe body 106 is provided along the axial direction of the first pipe 102. Although only the vehicle right side half of the exhaust heat recovery unit 100 is depicted in Fig. 3, the vehicle left side has a similar structure. Therefore, in the comparative example, the first pipe body 104 and the second pipe body 106 are welded at two locations, at left and right.

As described above, in the exhaust heat recovery unit 100 according to the comparative example, two welding steps are required to form the first pipe 102. In contrast, in the exhaust heat recovery unit 10 according to the present exemplary embodiment, the first pipe 12 is formed by joining the first pipe body 14 to the second pipe body 16 along the circumferential direction of the first pipe 12, as shown in Fig. 1. That is, if the first pipe body 14 and second pipe body 16 are joined by welding, the first pipe 12 may be formed with a single weld. Thus, productivity may be improved compared to the structure according to the comparative example.

As shown in Fig. 3, in the exhaust heat recovery unit 100 according to the comparative example, because the join portions between the first pipe body 104 and the second pipe body 106 are provided along the axial direction of the first pipe 102, irregularities are formed at portions of edges of a front side connection hole 102A and a rear side connection hole 102B in the first pipe 102. Therefore, when, for example, the connecting pipe 22 is inserted into the front side connection hole 102A, a gap may be formed between the front side connection hole 102A and the connecting pipe 22. In contrast, in the exhaust heat recovery unit 10 according to the present exemplary embodiment, because the first pipe body 14 and second pipe body 16 are joined in the vehicle front-and-rear direction as shown in Fig. 1, the front side connection hole 12A and the rear side connection hole 12B may be formed in single components. Therefore, the front side connection hole 12A and the rear side connection hole 12B may be formed in circular shapes with no irregularities, and ease of assembly of the connecting pipe 22 is improved. Furthermore, when a join portion is provided along the axial direction as in the comparative example, a temperature difference occurs between a front end and rear end of the join portion. In contrast, this temperature difference is unlikely to occur in the join portion according to the present exemplary embodiment. Therefore, thermal strain may be suppressed.

In the present exemplary embodiment, the first pipe body 14 and second pipe body 16 are joined in the state in which the rear end portion 14A of the first pipe body 14 is superposed with the outer periphery face of the front end portion 16A of the second pipe body 16. Therefore, compared with a structure in which the rear end portion 14A of the first pipe body 14 is superposed with an inner periphery face of the second pipe body 16, the join portion between the two members may be specified to be further to the exhaust gas downstream side. The exhaust gas is at lower temperatures at the downstream side closer to the muffler than at the upstream side closer to the engine. Therefore, consequent to the effects of the structure of the present exemplary embodiment, the join portion between the first pipe body 14 and the second pipe body 16 may be specified to be in a lower temperature region, and thermal strain caused by exhaust gas acting on the join region may be suppressed.

When the first pipe 12 is structured by the first pipe body 14 and the second pipe body 16 that are adjacent in the vehicle front-and-rear direction as in the present exemplary embodiment, versatility may be improved. To be specific, when the diameter of the front side connection hole 12A is to be modified, such as when the structure is to be employed in a different model of vehicle or the like, it is sufficient to modify only the design of the first pipe body 14. Similarly, when the diameter of the rear side connection hole 12B is to be modified, it is sufficient to modify only the design of the second pipe body 16. Thus, adaptations may be implemented by design modifications of single components.

Hereabove, an exhaust heat recovery structure according to an exemplary embodiment of the present disclosure is described. It will be clear that numerous exemplary embodiments are possible within a scope not departing from the gist of the present disclosure. For example, in the exemplary embodiment described above, the second pipe 18 is disposed at the vehicle upper side of the first pipe 12, but this is not limiting. Structures are possible in which the second pipe 18 is disposed at the vehicle right side or vehicle left side of the first pipe 12.

The heat exchanger 20 according to the exemplary embodiment described above is a structure in which exhaust gas is introduced into the heat-transfer tubes and heat exchange is implemented between this exhaust gas and a coolant, but this is not limiting. For example, a heat exchanger may be formed inside which coolant channels are provided instead of the heat-transfer tubes. In this case, heat is exchanged between the coolant flowing in the channels and exhaust gas outside the channels.

In the exemplary embodiment described above, the rear end portion 14A of the first pipe body 14 is superposed with the outer periphery face of the second pipe body 16, but this is not limiting. That is, structures are possible in which the front end portion 16A of the second pipe body 16 is superposed with an outer periphery face of the first pipe body 14 of the first pipe 12.

In the exemplary embodiment described above, the opening/closing valve 26 is disposed at the first pipe body 14 side of the first pipe 12. For example, structures are possible in which the opening/closing valve 26 is disposed at the second pipe body 16 side. Furthermore, a structure for opening and closing the opening/closing valve 26 is not limited to the illustrated structure. Various structures may be employed, provided the opening/closing valve 26 may be opened and closed.

## Claims

1. An exhaust heat recovery structure comprising:
a first pipe (12) through which exhaust gas from an engine flows;
a second pipe (18) that branches from the first pipe (12), a heat exchanger (20) configured to implement heat exchange with the exhaust gas being provided at the second pipe (18); and
an opening and closing valve (26) provided at the first pipe (12), the opening and closing valve (26) being configured to adjust flow amounts of the exhaust gas flowing into the second pipe (18) by opening and closing,
wherein the first pipe (12) includes a first pipe body (14) and a second pipe body (16) that are adjacent in a flow direction of the exhaust gas, and a join portion between the first pipe body (14) and the second pipe body (16) is provided along a circumferential direction of the first pipe (12),
**characterized in that**
the opening and closing valve (26) is disposed at the first pipe body (14) side of the first pipe (12),
the first pipe body (14) is disposed at an upstream side of the flow direction of the exhaust gas, and the second pipe body (16) is disposed at the downstream side of the flow direction of the exhaust gas; and
the first pipe body (14) and second pipe body (16) are joined in a state in which an end portion of the first pipe body (14), at a side thereof at which the second pipe body (16) is disposed, is superposed with an outer periphery face of the second pipe body (16).

2. The exhaust heat recovery structure according to claim 1, wherein:
a connection hole (12A) at which a connecting pipe is connected is formed at each of one axial direction end portion and another axial direction end portion of the first pipe (12); and,
viewed in an axial direction of the first pipe (12), the connection hole (12A) is formed in a circular shape with no irregularities.

3. The exhaust heat recovery structure according to any one of claims 1 or 2, configured so that coolant that has passed through the engine is introduced into the second pipe (18).

4. The exhaust heat recovery structure according to claim 1, wherein:
an opening is provided at an upper portion of the first pipe body (14) and the second pipe body (16); and
the opening is covered, from a vehicle upper side thereof, by a support plate (24) that supports the heat exchanger (20).

## Patentansprüche

1. Anordnung zur Rückgewinnung von Abgaswärme, umfassend:
ein erstes Rohr (12), durch welches Abgas von einem Motor strömt,
ein zweites Rohr (18), das von dem ersten Rohr (12) abzweigt, wobei ein Wärmetauscher (20), der dazu ausgestaltet ist, einen Wärmetausch mit dem Abgas zu implementieren, an dem zweiten Rohr (18) vorgesehen ist, und
ein Öffnungs- und Schließventil (26), das an dem ersten Rohr (12) vorgesehen ist, wobei das Öffnungs- und Schließventil (26) dazu ausgestaltet ist, die Strömungsmengen des Abgases, das in das zweite Rohr (18) einströmt, durch Öffnen und Schließen einzustellen,
wobei das erste Rohr (12) einen ersten Rohrkörper (14) und einen zweiten Rohrkörper (16) beinhaltet, die in einer Strömungsrichtung des Abgases benachbart sind, und wobei ein Vereinigungsabschnitt zwischen dem ersten Rohrkörper (14) und dem zweiten Rohrkörper (16) entlang einer Umfangsrichtung des ersten Rohrs (12) vorgesehen ist,
**dadurch gekennzeichnet, dass**
das Öffnungs- und Schließventil (26) an der dem ersten Rohrkörper (14) zugewandten Seite des ersten Rohrs (12) angeordnet ist,
der erste Rohrkörper (14) an einer stromaufwärtigen Seite der Strömungsrichtung des Abgases angeordnet ist, und der zweite Rohrkörper (16) an der stromabwärtigen Seite der Strömungsrichtung des Abgases angeordnet ist, und
der erste Rohrkörper (14) und der zweite Rohrkörper (16) in einem Zustand vereinigt sind, in welchem ein Endabschnitt des ersten Rohrkörpers (14) an einer Seite desselben, an welcher der zweite Rohrkörper (16) angeordnet ist, von einer äußeren Umfangsfläche des zweiten Rohrkörpers (16) überlagert wird.

2. Anordnung zur Rückgewinnung von Abgaswärme nach Anspruch 1, wobei:
ein Verbindungsloch (12A), an welchem ein Verbindungsrohr verbunden ist, an jedem von einem Endabschnitt in axialer Richtung und einem weiteren Endabschnitt in axialer Richtung des ersten Rohrs (12) gebildet ist und,
in einer axialen Richtung des ersten Rohrs (12) gesehen, das Verbindungsloch (12A) in einer kreisförmigen Gestalt ohne Unregelmäßigkeiten gebildet ist.

3. Anordnung zur Rückgewinnung von Abgaswärme nach einem der Ansprüche 1 oder 2, die so ausgestaltet ist, dass Kühlmittel, das den Motor passiert hat, in das zweite Rohr (18) eingeleitet wird.

4. Anordnung zur Rückgewinnung von Abgaswärme nach Anspruch 1, wobei:
eine Öffnung an einem oberen Abschnitt des ersten Rohrkörpers (14) und des zweiten Rohrkörpers (16) vorgesehen ist, und
die Öffnung von einer in Bezug auf das Fahrzeug oberen Seite davon durch eine Trägerplatte (24) abgedeckt wird, welche den Wärmetauscher (20) trägt.

## Revendications

1. Structure de récupération de chaleur d'échappement comprenant :
un premier tuyau (12) à travers lequel du gaz d'échappement d'un moteur s'écoule;
un deuxième tuyau (18) qui s'embranche depuis le premier tuyau (12), un échangeur de chaleur (20) configuré pour mettre en œuvre un échange de chaleur avec le gaz d'échappement qui est prévu au niveau du deuxième tuyau (18) ; et
une soupape d'ouverture et de fermeture (26) prévue au niveau du premier tuyau (12), la soupape d'ouverture et de fermeture (26) étant configurée pour ajuster des quantités d'écoulement du gaz d'échappement qui s'écoulent dans le deuxième tuyau (18) en s'ouvrant et se fermant,
le premier tuyau (12) comprenant un premier corps de tuyau (14) et un deuxième corps de tuyau (16) qui sont adjacents dans une direction d'écoulement du gaz d'échappement, et une partie de jonction entre le premier corps de tuyau (14) et le deuxième corps de tuyau (16) étant prévue le long d'une direction circonférentielle du premier tuyau (12),
**caractérisée en ce que**
la soupape d'ouverture et de fermeture (26) est disposée sur le côté de premier corps de tuyau (14) du premier tuyau (12),
le premier corps de tuyau (14) est disposé sur un côté amont de la direction d'écoulement du gaz d'échappement, et le deuxième corps de tuyau (16) est disposé sur le côté aval de la direction d'écoulement du gaz d'échappement ; et
le premier corps de tuyau (14) et le deuxième corps de tuyau (16) sont reliés dans un état dans lequel une partie d'extrémité du premier corps de tuyau (14), sur un côté de celui-ci au niveau duquel le deuxième corps de tuyau (16) est disposé, est superposée avec une face de périphérie extérieure du deuxième corps de tuyau (16).

2. Structure de récupération de chaleur d'échappement selon la revendication 1, dans laquelle :
un trou de raccordement (12A) au niveau duquel un tuyau de raccordement est raccordé est formé à chacune d'une partie d'extrémité de direction axiale et d'une autre partie d'extrémité de direction axiale du premier tuyau (12) ; et,
vu dans une direction axiale du premier tuyau (12), le trou de raccordement (12A) est formé dans une forme circulaire sans irrégularité.

3. Structure de récupération de chaleur d'échappement selon l'une quelconque des revendications 1 ou 2, configuré de telle sorte que de l'agent de refroidissement qui est passé à travers le moteur est introduit dans le deuxième tuyau (18).

4. Structure de récupération de chaleur d'échappement selon la revendication 1, dans laquelle :
une ouverture est prévue au niveau d'une partie supérieure du premier corps de tuyau (14) et du deuxième corps de tuyau (16) ; et
l'ouverture est recouverte, depuis un côté supérieur de véhicule de celle-ci, par une plaque de support (24) qui supporte l'échangeur de chaleur (20).
